(19) **Europäisches Patentamt / European Patent Office / Office européen des brevets**

(11) **EP 4 579 802 A1**

(12) **EUROPEAN PATENT APPLICATION**

(43) Date of publication:
02.07.2025 Bulletin 2025/27

(51) International Patent Classification (IPC):
$H01M\ 4/36^{(2006.01)}$ $H01M\ 4/505^{(2010.01)}$
$H01M\ 4/525^{(2010.01)}$ $H01M\ 4/58^{(2010.01)}$
$H01M\ 4/587^{(2010.01)}$ $H01M\ 10/0525^{(2010.01)}$
$H01M\ 4/02^{(2006.01)}$

(21) Application number: 24223078.7

(22) Date of filing: 23.12.2024

(52) Cooperative Patent Classification (CPC):
H01M 4/525; H01M 4/364; H01M 4/505;
H01M 4/5825; H01M 4/587; H01M 10/0525;
H01M 2004/021

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.12.2023 KR 20230196157

(71) Applicant: SK On Co., Ltd.
Seoul 03161 (KR)

(72) Inventors:
• KIM, Hong Ki
Daejeon 34124 (KR)
• NOH, Mi Jung
Daejeon 34124 (KR)

(74) Representative: Prüfer & Partner mbB
Patentanwälte · Rechtsanwälte
Sohnckestraße 12
81479 München (DE)

(54) **CATHODE ACTIVE MATERIAL FOR LITHIUM SECONDARY BATTERY AND LITHIUM SECONDARY BATTERY INCLUDING THE SAME**

(57) A cathode active material for a lithium secondary battery according to the embodiments of the present disclosure includes: first cathode active material particles which includes a lithium metal oxide containing nickel, cobalt and manganese; and second cathode active material particles which includes a lithium phosphate compound, wherein a molar ratio of the cobalt based on a total number of moles of the nickel, cobalt and manganese in the first cathode active material particles may be more than 0 and less than 0.15, and a weight ratio of the first cathode active material particles and the second cathode active material particles is 20:80 to 80:20. Accordingly, a lithium secondary battery having improved stability, capacity characteristics, and lifespan characteristics while reducing production costs may be implemented.

[FIG. 1]

EP 4 579 802 A1

**Description**

[BACKGROUND OF THE INVENTION]

1. Field of the Invention

The disclosure of the present application relates to a cathode active material for a lithium secondary battery and a secondary battery including the same, and more specifically, to a cathode active material for a lithium secondary battery which includes a plurality of types of lithium-based active materials and a lithium secondary battery including the cathode active material.

2. Description of the Related Art

A secondary battery is a battery which can be repeatedly charged and discharged, and has been widely applied to portable electronic devices such as a mobile phone, a laptop computer, etc. as a power source thereof. A lithium secondary battery has a high operating voltage and a high energy density per unit weight, and is advantageous in terms of a charging speed and light weight. In this regard, the lithium secondary battery has been actively developed and applied to various industrial fields.

The lithium secondary battery may store an electric energy by a difference in chemical potential when lithium ions are intercalated and deintercalated between a cathode and an anode. Accordingly, the lithium secondary battery may use materials capable of reversibly intercalating and deintercalating the lithium ions as a cathode active material and an anode active material.

For example, as the cathode active material, a lithium cobalt oxide ($LiCoO_2$), lithium nickel oxide ($LiNiO_2$), lithium manganese oxide ($LiMnO_2$), lithium manganese iron phosphate (LMFP), lithium iron phosphate (LFP), lithium nickel-cobalt-manganese oxide (NCM), lithium nickel-aluminum-manganese oxide (NCA), etc. are used.

Among the cathode active materials, the NCM-based active material has deteriorated chemical stability, and the LFP-based active material has relatively low ionic conductivity, and may not provide sufficient high output characteristics.

[SUMMARY OF THE INVENTION]

An object of the present disclosure is to provide a cathode active material for a lithium secondary battery which provides improved chemical stability and output.

Another object of the present disclosure is to provide a lithium secondary battery including the cathode active material which has improved chemical stability and output.

To achieve the above objects, according to an aspect of the present invention, there is provided a cathode active material for a lithium secondary battery, including: first cathode active material particles which includes a lithium metal oxide containing nickel, cobalt and manganese; and second cathode active material particles which includes a lithium phosphate compound, wherein a molar ratio of the cobalt based on a total number of moles of the nickel, cobalt and manganese in the first cathode active material particles is more than 0 and less than 0.15, and a weight ratio of the first cathode active material particles and the second cathode active material particles is 20:80 to 80:20.

In some embodiments, the molar ratio of the cobalt based on the total number of moles of nickel, cobalt and manganese in the first cathode active material particles may be 0.01 to 0.10.

In some embodiments, the weight ratio of the first cathode active material particles and the second cathode active material particles may be 25:75 to 75:25.

In some embodiments, the weight ratio of the first cathode active material particles and the second cathode active material particles may be 30:70 to 70:30.

In some embodiments, the first cathode active material particles may include a lithium metal oxide having a structure represented by Formula 1 below.

$$[\text{Formula 1}] \qquad Li_bNi_xCo_yMn_zM1_kO_{2+a}$$

In Formula 1, M1 may include at least one selected from the group consisting of Fe, Na, Mg, Ca, Ti, V, Cr, Cu, Zn, Ge, Sr, Ag, Ba, Zr, Nb, Al, Mo, Ga, W, Y, La, Ta and B, and x, y, z, k, a and b may satisfy $0.5 \leq x \leq 1.0$, $0 < y < 0.15$, $0 < z \leq 0.3$, $0 \leq k \leq 0.2$, $x+y+z+k=1$, $0 \leq a \leq 0.5$, and $0.9 \leq b \leq 1.2$.

In some embodiments, in Formula 1, y may be in a range of $0.01 \leq y \leq 0.10$.

In some embodiments, the lithium phosphate compound may include at least one selected from the group consisting of a lithium iron phosphate and a lithium manganese iron phosphate.

In some embodiments, the lithium iron phosphate may have a structure represented by Formula 2 below.

[Formula 2]          $Li_cFe_dM2_ePO_4$

In Formula 2, M2 may be at least one selected from the group consisting of Ni, Co, Mg, Y, Zn, Ru, Ti, Nb, Mo, Cr, Cu, Zr, W, Ir and V, and c, d and e may satisfy $0.9 \leq c \leq 1.5$, $0.15 \leq d \leq 1$, and $0 \leq e \leq 0.9$.

In some embodiments, the lithium manganese iron phosphate may have a structure represented by Formula 3 below:

[Formula 3]          $Li_fFe_gMn_hM3_iPO_4$

In Formula 3, M3 may be at least one selected from the group consisting of Ni, Co, Mg, Y, Zn, Ru, Ti, Nb, Mo, Cr, Cu, Zr, W, Ir and V, and f, g, h and i may satisfy $0.9 \leq f \leq 1.5$, $0.01 < g < 0.3$, $0.6 < h < 0.99$, $0 \leq i \leq 0.1$.

According to another aspect of the present invention, there is provided a lithium secondary battery, including: a cathode including a cathode active material layer which includes the above-described cathode active material for a lithium secondary battery; and an anode disposed to face the cathode.

In some embodiments, the anode may include an anode active material layer including an anode active material, and the anode active material may include a carbon-based active material.

In some embodiments, the carbon-based active material may include artificial graphite.

In some embodiments, the carbon-based active material may further include natural graphite.

In some embodiments, a weight ratio of the artificial graphite and the natural graphite may be 99:1 to 5:5.

In some embodiments, the weight ratio of the artificial graphite and the natural graphite may be 8:2 to 6:4.

The cathode active material for a lithium secondary battery according to the embodiments of the present disclosure includes the first cathode active material particles including a lithium metal oxide containing cobalt in a predetermined molar ratio based on the total number of moles of nickel, cobalt and manganese, and the second cathode active material particles including a lithium phosphate compound in a specific mixing ratio.

For example, high-capacity and high-output characteristics of the lithium secondary battery may be secured through the first cathode active material particles, and the stability of the lithium secondary battery may be secured through the second cathode active material particles.

Accordingly, the lithium secondary battery manufactured using the cathode active material is capable of improving capacity characteristics and lifespan characteristics, and may produce the battery at lower costs, while improving the chemical stability.

The cathode to which the cathode active material is applied and/or the lithium secondary battery including the same may be widely applied in green technology fields, such as electric vehicles, battery charging stations, as well as solar power generation, wind power generation, and the like, which use the batteries. In addition, the lithium secondary battery may be used in eco-friendly electric vehicles, hybrid vehicles, and the like, which are intended to prevent climate change by suppressing air pollution and greenhouse gas emission.

[BRIEF DESCRIPTION OF THE DRAWINGS]

The above and other objects, features and other advantages of the present invention will be more clearly understood from the following detailed description taken in conjunction with the accompanying drawings, in which:

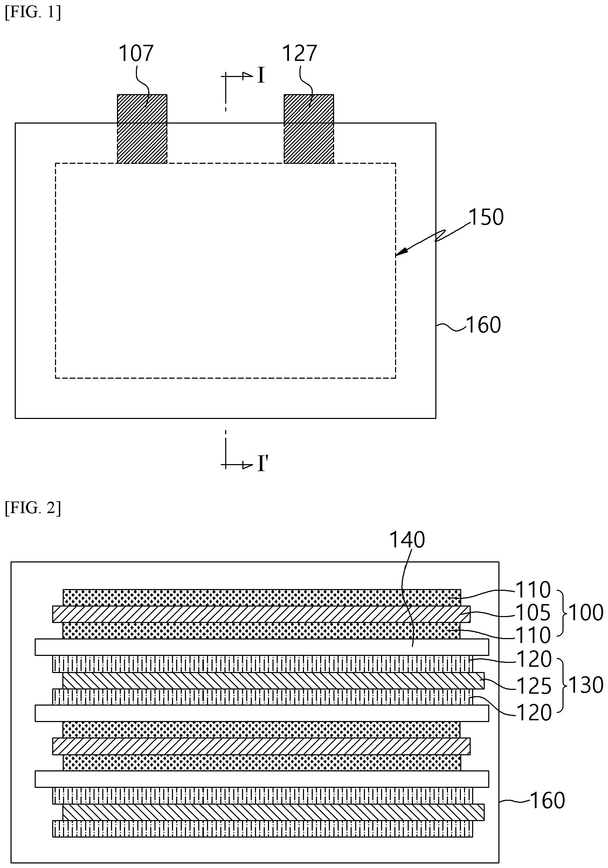

FIGS. 1 and 2 are a schematic plan view and a cross-sectional view illustrating a lithium secondary battery according to exemplary embodiments, respectively.

[DETAILED DESCRIPTION OF THE INVENTION]

According to embodiments of the present disclosure, there is provided a cathode active material which includes first cathode active material particles including a lithium metal oxide containing cobalt in a predetermined molar ratio based on a total number of moles of nickel, cobalt and manganese, and second cathode active material particles including a lithium phosphate compound in a specific mixing ratio.

A lithium secondary battery according to exemplary embodiments may include a cathode manufactured from the cathode active material.

As used herein, the terms "first" and "second" do not limit the number or order of subjects modified by the "first" and the "second," but are used to distinguish the modified subjects which are different from each other.

Hereinafter, embodiments of the present disclosure will be described in more detail with reference to specific implementation examples and drawings. However, the embodiments are merely illustrative and the present disclosure is not limited to the specific embodiments described by way of example.

<Cathode active material for **lithium** secondary battery>

A cathode active material for a lithium secondary battery according to exemplary embodiments may include first cathode active material particles including a lithium metal oxide containing nickel, cobalt and manganese, and second cathode active material particles including a lithium phosphate compound.

In some embodiments, the cathode active material may be substantially composed of the first cathode active material particles and the second cathode active material particles.

In some embodiments, the first cathode active material particles may include a lithium metal oxide having a structure represented by Formula 1 below.

[Formula 1]     $Li_bNi_xCo_yMn_zM1_kO_{2+a}$

In Formula 1, M1 may include at least one selected from the group consisting of Fe, Na, Mg, Ca, Ti, V, Cr, Cu, Zn, Ge, Sr, Ag, Ba, Zr, Nb, Al, Mo, Ga, W, Y, La, Ta and B, and x, y, z, k, a and b may satisfy $0.5 \leq x \leq 1.0$, $0 < y < 0.15$, $0 < z \leq 0.3$, $0 \leq k \leq 0.2$, $x+y+z+k=1$, $0 \leq a \leq 0.5$, and $0.9 \leq b \leq 1.2$.

The chemical structure represented by Formula 1 indicates a bonding relationship between elements included in the layered structure or crystal structure of the cathode active material, and does not exclude other additional elements. For example, Co and/or Mn may be provided as main active elements of the cathode active material together with Ni. Here, it should be understood that Formula 1 is provided to express the bonding relationship between the main active elements, and is a formula encompassing introduction and substitution of the additional elements.

In one embodiment, the cathode active material may further include auxiliary elements which are added to the main active elements, thus to enhance chemical stability thereof or the layered structure/crystal structure. The auxiliary element may be incorporated into the layered structure/crystal structure together to form a bond, and it should be understood that this case is also included within the chemical structure range represented by Formula 1.

The auxiliary element may include, for example, at least one selected from the group consisting of Fe, Na, Mg, Ca, Ti, V, Cr, Cu, Zn, Ge, Sr, Ag, Ba, Zr, Nb, Al, Mo, Ga, W, Y, La, Ta and B. The auxiliary element may also act as an auxiliary active element which contributes to the capacity/output activity of the cathode active material together with Co or Mn.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the first cathode active material particles, or may penetrate through the surface of the first cathode active material particles to be included in the bonding structure represented by Formula 1 above.

For example, nickel (Ni) may be provided as a metal associated with the capacity of the lithium secondary battery. The higher the content of nickel, the better the capacity and output of the lithium secondary battery, but if the content of nickel is excessively increased, the lifespan of the battery may be decreased, and it may be disadvantageous in terms of mechanical and electrical stabilities.

For example, cobalt (Co) may be a metal associated with the conductivity or resistance of the lithium secondary battery, and may improve the crystallinity and structural stability of the cathode active material. However, supply and demand for the cobalt may be unstable and the price may be high.

For example, manganese (Mn) may be provided as a metal associated with the mechanical and electrical stabilities of the lithium secondary battery.

In some embodiments, a molar ratio of the cobalt based on the total number of moles of nickel, cobalt and manganese in the first cathode active material particles may be more than 0 and less than 0.15. For example, if the molar ratio of the cobalt is 0.15 or more, production costs of the battery may become too high.

For example, the molar ratio of the cobalt may be more than 0 to 0.10, more than 0 to 0.05, more than 0 to 0.03, more than 0 to 0.02, more than 0 to 0.01, 0.001 to 0.10, 0.001 to 0.05, 0.001 to 0.03, 0.001 to 0.02, 0.001 to 0.01, 0.01 to 0.15, 0.01 to 0.10, 0.01 to 0.05, 0.01 to 0.03, or 0.01 to 0.02.

For example, in Formula 1 above, y may be in a range of $0 < y < 0.15$, $0 < y \leq 0.10$, $0 < y \leq 0.05$, $0 < y \leq 0.03$, $0 < y \leq 0.02$, $0 < y \leq 0.01$, $0.001 \leq y \leq 0.10$, $0.001 \leq y \leq 0.05$, $0.001 \leq y \leq 0.03$, $0.001 \leq y \leq 0.02$, $0.001 \leq y \leq 0.01$, $0.01 \leq y \leq 0.15$, $0.01 \leq y \leq 0.10$, $0.01 \leq y \leq 0.05$, $0.01 \leq y \leq 0.03$ or $0.01 \leq y \leq 0.02$.

Within the above range, the capacity, output, lifespan and stability of the lithium secondary battery may be improved even though the molar ratio of the cobalt with high prices is low.

In one embodiment, the molar ratio of the cobalt based on the total number of moles of nickel, cobalt and manganese in the first cathode active material particles may be greater than 0. For example, if the molar ratio of the cobalt is 0, the crystallinity and structural stability of the cathode active material may be deteriorated.

For example, the first cathode active material particles including the lithium metal oxide having the structure represented by Formula 1 above may have improved lithium ion conductivity and output characteristics compared to the second cathode active material particles.

In one embodiment, the first cathode active material particles may be composed of the lithium metal oxide having the structure represented by Formula 1 above.

In some embodiments, the lithium phosphate compound may include at least one selected from the group consisting of a lithium iron phosphate and a lithium manganese iron phosphate. For example, the lithium phosphate compound may include the lithium iron phosphate or the lithium manganese iron phosphate.

In one embodiment, the lithium iron phosphate may contain iron (Fe) and phosphorus (P), but may not contain manganese (Mn).

In some embodiments, the lithium iron phosphate may have a structure represented by Formula 2 below.

$$[\text{Formula 2}] \qquad Li_cFe_dM2_ePO_4$$

In Formula 2, M2 may be at least one selected from the group consisting of Ni, Co, Mg, Y, Zn, Ru, Ti, Nb, Mo, Cr, Cu, Zr, W, Ir and V, and c, d and e may satisfy $0.9 \leq c \leq 1.5$, $0.15 \leq d \leq 1$, and $0 \leq e \leq 0.9$.

In some embodiments, the lithium manganese iron phosphate may have a structure represented by Formula 3 below.

$$[\text{Formula 3}] \qquad Li_fFe_gMn_hM3_iPO_4$$

In Formula 3, M3 may be at least one selected from the group consisting of Ni, Co, Mg, Y, Zn, Ru, Ti, Nb, Mo, Cr, Cu, Zr, W, Ir and V, and f, g, h and i may satisfy $0.9 \leq f \leq 1.5$, $0.01 \leq g \leq 0.3$, $0.6 \leq h \leq 0.99$, and $0 \leq i \leq 0.1$.

For example, the second cathode active material particles including at least one of the lithium iron phosphate having the structure represented by Formula 2 above and the lithium manganese iron phosphate having the structure represented by Formula 3 above may have improved crystal, structural and chemical stabilities compared to the first cathode active material particles.

In one embodiment, the second cathode active material particles may be composed of the lithium iron phosphate having the structure represented by Formula 2 above, or the lithium manganese iron phosphate having the structure represented by Formula 3 above.

In some embodiments, the first cathode active material particles and the second cathode active material particles is included in a weight ratio of 20:80 to 80:20. For example, the weight ratio may be 20:80 to 60:40, 20:80 to 50:50, 20:80 to 40:60, 20:80 to 35:65, 25:75 to 75:25, 25:75 to 60:40, 30:70 to 70:30, 30:70 to 60:40, or 30:70 to 40:60.

If the content of the first cathode active material particles based on a sum of the first cathode active material particles and the second cathode active material particles is less than 20% by weight ("wt%"), the output characteristics and capacity characteristics of the lithium secondary battery may be deteriorated, and if the content of the first cathode active material particles is greater than 80 wt%, the stability of the cathode active material may be deteriorated.

In some embodiments, the cathode active material may include the first cathode active material particles and the second cathode active material particles together, thereby improving the capacity, output, lifespan and stability of the lithium secondary battery, even though the content of the cobalt with high prices is low.

For example, even if the cobalt is included in the cathode active material in a small amount, the high capacity and high output characteristics of the lithium secondary battery may be secured through the first cathode active material particles, and the stability of the lithium secondary battery may be secured through the second cathode active material particles.

In some embodiments, the first cathode active material particles and the second cathode active material particles may have a secondary particle structure in which primary particles are assembled. For example, these particles may have a secondary particle structure in which a plurality of primary particles are aggregated.

### <Lithium secondary battery>

FIGS. 1 and 2 are a schematic plan view and a cross-sectional view of a lithium secondary battery according to exemplary embodiments, respectively. FIG. 2 is a cross-sectional view taken on line I-I' shown in FIG. 1 in a thickness direction of the battery.

Referring to FIGS. 1 and 2, the lithium secondary battery includes a cathode 100 including a cathode active material layer which includes the above-described cathode active material for a lithium secondary battery, and an anode 130 disposed to face the cathode 100.

The cathode 100 may include a cathode active material layer 110 formed by applying the above-described cathode active material to a cathode current collector 105.

For example, a slurry may be prepared by mixing the above-described cathode active material according to the embodiments with a binder, a conductive material and/or a dispersant in a solvent, followed by stirring the same. The cathode current collector 105 may be coated with the cathode slurry, followed by drying and compressing to form the cathode 100.

Non-limiting examples of the solvent may include N-methyl-2-pyrrolidone (NMP), dimethylformamide, dimethylacetamide, N,N-dimethylaminopropylamine, ethylene oxide, tetrahydrofuran and the like.

The coating process may be performed by a method such as gravure coating, slot die coating, simultaneous multilayer die coating, imprinting, doctor blade coating, dip coating, bar coating or casting, etc., but it is not limited thereto.

The cathode current collector 105 may include, for example, stainless steel, nickel, aluminum, titanium, copper, or an alloy thereof. The cathode current collector may also include aluminum or stainless steel subjected to surface treatment with carbon, nickel, titanium or silver. The cathode current collector may have a diameter of, for example, 10 $\mu$m to 50 $\mu$m, but it is not limited thereto.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, an amount of the binder for forming the cathode active material layer 110 may be reduced and an amount of the cathode active material may be relatively increased. Thereby, the output and capacity of the secondary battery may be improved.

The conductive material may be included to facilitate electron transfer between the active material particles. For example, the conductive material may include a carbon-based conductive material such as graphite, carbon black, acetylene black, Ketjen black, graphene, carbon nanotubes, vapor-grown carbon fibers (VGCFs), carbon fibers, and/or a metal-based conductive material including tin, tin oxide, titanium oxide, or a perovskite material such as LaSrCoO$_3$, and LaSrMnO$_3$.

The anode 130 may include an anode current collector 125 and an anode active material layer 120 formed by coating the anode current collector 125 with an anode active material.

The anode active material useable herein may include any material known in the related art, so long as it can intercalate and deintercalate lithium ions, without particular limitation thereof. For example, as the anode active material, a carbon-based material such as crystalline carbon, amorphous carbon, a carbon composite, or carbon fibers; lithium metal; a lithium alloy; a silicon (Si)-containing material or tin (Sn)-containing material; and the like may be used.

Examples of the amorphous carbon may include hard carbon, cokes, mesocarbon microbead (MCMB), mesophase pitch-based carbon fiber (MPCF) or the like.

Examples of the crystalline carbon may include graphite-based carbon such as natural graphite, artificial graphite, graphite cokes, graphite MCMB, graphite MPCF or the like.

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin film layer may be used as the anode active material layer.

Elements included in the lithium alloy may include aluminum, zinc, bismuth, cadmium, antimony, silicon, lead, tin, gallium or indium, etc.

The silicon-containing material may provide further increased capacity characteristics. The silicon-containing material may include Si, SiO$_x$ (0<x<2), a silicon-carbon composite, a metal-doped silicate, or SiO$_x$ (0<x<2), etc. The metal may include lithium and/or magnesium.

In some embodiments, the anode active material may include a carbon-based active material.

In some embodiments, the carbon-based active material may include artificial graphite. For example, the carbon-based active material may further include natural graphite. The mechanical stability of the battery may be improved through the artificial graphite, and the capacity and output of the battery may be improved through the natural graphite.

In some embodiments, a weight ratio of the artificial graphite and the natural graphite may be 99:1 to 5:5, for example, 8:2 to 6:4. Within the above range, the mechanical stability, lifespan characteristics, capacity characteristics and output characteristics of the battery may be improved.

For example, a form of slurry may be prepared by mixing the anode active material with a binder, a conductive material, thickener, and the like in a solvent, followed by stirring the same. The slurry may be applied to at least one surface of the anode current collector 125, followed by compressing and drying to prepare the anode 130.

Non-limiting examples of the solvent may include water, pure water, deionized water, distilled water, ethanol, isopropanol, methanol, acetone, n-propanol, t-butanol and the like.

The coating process may be performed by a method such as gravure coating, slot die coating, simultaneous multilayer die coating, imprinting, doctor blade coating, dip coating, bar coating or casting, etc., but it is not limited thereto.

As the binder and the conductive material, materials substantially the same as or similar to the above-described materials used in the cathode active material layer 110 may be used. In some embodiments, a binder for forming the anode may include, for example, an aqueous binder such as styrene-butadiene rubber (SBR) for consistency with the carbon-based active material, and may be used together with a thickener such as carboxymethyl cellulose (CMC).

In one embodiment, a separation membrane 140 may be interposed between the cathode 100 and the anode 130. The separation membrane may prevent electrical short-circuit between the cathode and the anode, and maintain flow of ions. According to an embodiment, the separation membrane may have a thickness of 10 μm to 20 μm, but in the present disclosure, it is not limited thereto.

For example, the separation membrane 140 may include a porous polymer film or a porous nonwoven fabric. The porous polymer film may include a polyolefin polymer such as an ethylene polymer, a propylene polymer, an ethylene/-butene copolymer, an ethylene/hexene copolymer, and an ethylene/methacrylate copolymer, etc. The porous nonwoven fabric may include glass fibers having a high melting point, polyethylene terephthalate fibers and the like.

The separation membrane may also include a ceramic-based material. For example, inorganic particles may be applied to the polymer film or dispersed within the polymer film to improve heat resistance.

The separation membrane may have a single-layer or multi-layer structure including the above-described polymer film and/or non-woven fabric.

In some embodiments, the anode 130 may have an area (e.g., a contact area with the separation membrane 140) and/or volume larger than those/that of the cathode 100. Thereby, lithium ions generated from the cathode 100 may smoothly move to the anode 130 without being precipitated in the middle, for example.

According to exemplary embodiments, the cathode 100, the anode 130 and the separation membrane 140 may be repeatedly disposed to form an electrode assembly 150. In some embodiments, the electrode assembly 150 may have a jelly roll shape formed by winding, stacking, z-folding, or stack-folding the separation membrane 140.

In one embodiment, the electrode assembly 150 may have a jelly roll shape formed by winding the cathode 100, the anode 130 and the separation membrane 140 together. In one embodiment, the electrode assembly 150 may have a jelly roll shape in which the notched cathodes and anodes are disposed in a space formed by repeatedly z-folding the separation membrane 140.

In one embodiment, the electrode assembly may be formed by repeatedly stacking the cathodes, anodes, and separation membranes with the respective layers being cut or separated from each other.

The electrode assembly 150 may be housed within a case 160 together with an electrolyte to define a lithium secondary battery. According to exemplary embodiments, a non-aqueous electrolyte may be used as the electrolyte.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

The organic solvent may include an organic compound which has sufficient solubility to the lithium salt and an additive, and does not have reactivity in the battery. For example, the organic solvent may include at least one of a carbonate solvent, an ester solvent, an ether solvent, a ketone solvent, an alcohol solvent and an aprotic solvent.

As the organic solvent, for example, propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfur oxide, acetonitrile, dimethoxyethane, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like.

The cyclic carbonate compound may include vinylene carbonate (VC), vinyl ethylene carbonate (VEC), etc.

The fluorine-substituted cyclic carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

As shown in FIG. 1, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

The lithium secondary battery may be manufactured, for example, in a cylindrical shape using a can, a square shape, a pouch type or a coin shape.

**<Examples and Comparative Examples>**

**(1) Preparation of cathode active material**

As described in Table 1 below, cathode active materials of the examples and comparative examples were prepared by mixing the first cathode active material particles and the second cathode active material particles.

[TABLE 1]

| Division | First positive electrode active material particles (content) | Second positive electrode active material particles (content) |
|---|---|---|
| Example 1 | $LiNi_{0.75}Mn_{0.25}O_2$ (30 wt%) | $LiFePO_4$ (70 wt%) |
| Example 2 | $LiNi_{0.75}Co_{0.02}Mn_{0.23}O_2$ (30 wt%) | $LiMn_{0.8}Fe_{0.2}PO_4$ (70 wt%) |
| Example 3 | $LiNi_{0.75}Co_{0.02}Mn_{0.23}O_2$ (40 wt%) | $LiFePO_4$ (60 wt%) |
| Example 4 | $LiNi_{0.75}Co_{0.02}Mn_{0.23}O_2$ (20 wt%) | $LiFePO_4$ (80 wt%) |
| Example 5 | $LiNi_{0.75}Co_{0.02}Mn_{0.23}O_2$ (50 wt%) | $LiFePO_4$ (50 wt%) |
| Example 6 | $LiNi_{0.6}oC_{0.10}Mn_{0.30}O_2$ (50 wt%) | $LiFePO_4$ (50 wt%) |
| Example 7 | $LiNi_{0.75}Co_{0.02}Mn_{0.23}O_2$ (80 wt%) | $LiFePO_4$ (20 wt%) |
| Comparative Example 1 | $LiNi_{0.75}Mn_{0.25}O_2$ (100 wt%) | - |
| Comparative Example 2 | - | $LiFePO_4$ (100 wt%) |
| Comparative Example 3 | $LiNi_{0.75}Co_{0.15}Mn_{0.1}O_2$ (30 wt%) | $LiFePO_4$ (70 wt%) |
| Comparative Example 4 | $LiNi_{0.75}Co_{0.15}Mno_{0.1}O_2$ (100 wt%) | - |
| Comparative Example 5 | $LiNi_{0.50}Co_{0.20}Mn_{0.30}O_2$ (30 wt%) | $LiFePO_4$ (70 wt%) |
| Comparative Example 6 | $LiNi_{0.33}Co_{0.33}Mn_{0.33}O_2$ (30 wt%) | $LiFePO_4$ (70 wt%) |

**(2) Manufacturing of lithium secondary battery**

A cathode slurry was prepared by mixing the cathode active material prepared in the above (1), carbon black as a conductive material, and polyvinylidene fluoride (PVdF) as a binder in a weight ratio of 92:5:3.

The cathode slurry was uniformly applied to a region of an aluminum foil (thickness: 15 $\mu$m) having a protrusion part (cathode tab) on one side except for the protrusion part, followed by drying and pressing the same to prepare a cathode.

An anode slurry was prepared by mixing a mixture of artificial graphite and natural graphite (weight ratio of 7:3) as an anode active material, styrene-butadiene rubber as a binder, and carboxymethyl cellulose as a thickener in a weight ratio of 97:1:2.

The anode slurry was uniformly applied to a region of an aluminum foil (thickness: 15 $\mu$m) having a protrusion part (anode tab) on one side except for the protrusion part, followed by drying and pressing the same to prepare an anode.

An electrode assembly was formed by interposing a polyethylene separation membrane (thickness: 20 $\mu$m) between the cathode and the anode. Next, a cathode lead and an anode lead were welded and connected to the cathode tab and the anode tab, respectively.

The electrode assembly was housed in a pouch (case) so that some regions of the cathode lead and the anode lead were exposed to an outside of the pouch, followed by sealing three sides of the pouch except for a side of an electrolyte injection part.

After injecting the electrolyte and sealing the side of the electrolyte injection part, a lithium secondary battery was prepared by impregnation for 12 hours.

The electrolyte used herein was prepared by dissolving 1M $LiPF_6$ solution (a mixed solvent of EC/EMC/DEC in a volume ratio of 25:30:45), and adding and mixing 1 wt% of fluoroethylene carbonate (FEC), 0.3 wt% of vinylethylene carbonate (VC), 1.0 wt% of lithium difluorophosphate ($LiPO_2F_2$), 0.5 wt% of 1,3-propane sultone (PS), and 0.5 wt% of prop-1-ene-1,3-sultone (PRS) based on the total weight of the electrolyte.

**<Experimental Example>**

**Experimental Example 1: Evaluation of DSC calorific value**

Changes in heat amount of the lithium secondary batteries of the examples and comparative examples were measured using a differential scanning calorimetry (DSC) device. Here, the measurement was performed using a method of increasing the temperature from 25°C to 450°C at a heating rate of 5°C per minute.

Calorific values obtained by integrating the calorific value curve on the DSC with respect to the temperature are shown in Table 2 below.

**Experimental Example 2: Evaluation of initial capacity**

The lithium secondary batteries of the examples and comparative examples were charged at 0.1 C-rate CC/CV (4.2 V, 0.05 C cut-off) at 25°C, and then 0.1 C-rate CC discharge (2.5 V cut-off) was performed three times.

Discharge capacity values of the second time were set as C1 which is an initial capacity of the lithium secondary battery, and are shown in Table 2 below.

**Experimental Example 3: Evaluation of capacity retention rate after high temperature storage**

The lithium secondary batteries of the examples and comparative examples were charged at 0.1 C to 4.2 V at 25°C, and then stored at a high temperature (60°C) for 4 weeks. After leaving them at the high temperature, the lithium secondary batteries were discharged at 0.1 C-rate CC (2.5 V cut-off), then the discharge capacities C2 were measured.

Capacity retention rates after the high temperature storage were calculated according to an equation below, and results thereof are shown in Table 2 below.

$$\text{Capacity retention rate (\%)} = (C2/C1) \times 100$$

**Experimental Example 4: Evaluation of gas generation amount after high temperature storage**

The lithium secondary batteries of the examples and comparative examples were charged at 0.1 C to 4.2 V at 25°C, and the gas generation amounts after leaving them at a high temperature (60°C) for 4 weeks were checked through gas chromatography (GC) analysis.

In order to measure a total gas generation amount, a hole was formed in a vacuum chamber having a predetermined volume (V), and the pressure changes were measured to calculate gas generation volumes, and results thereof are shown in Table 2 below.

[TABLE 2]

| Division | DSC calorific value (J/g) | Discharge capacity (mAh) | Capacity retention rate[1] (%) | Gas generation amout[2] (mL) |
|---|---|---|---|---|
| Example 1 | 1430 | 150 | 87 | 19 |
| Example 2 | 1500 | 145 | 86 | 21 |
| Example 3 | 1650 | 160 | 85 | 25 |
| Example 4 | 1300 | 140 | 89 | 18 |
| Example 5 | 1700 | 165 | 90 | 28 |
| Example 6 | 1600 | 155 | 90 | 24 |
| Example 7 | 1800 | 175 | 83 | 30 |
| Comparative Example 1 | 2700 | 170 | 92 | 40 |
| Comparative Example 2 | 1000 | 110 | 98 | 12 |
| Comparative Example 3 | 1650 | 140 | 90 | 37 |
| Comparative Example 4 | 2800 | 185 | 82 | 50 |
| Comparative Example 5 | 1400 | 135 | 88 | 17 |

(continued)

| Division | DSC calorific value (J/g) | Discharge capacity (mAh) | Capacity retention rate[1] (%) | Gas generation amout[2] (mL) |
|---|---|---|---|---|
| Comparative Example 6 | 1300 | 130 | 88 | 16 |
| [1]: Storage at 60°C [2]: Storage at 60°C | | | | |

Referring to Tables 1 and 2 above, in the lithium secondary batteries of the examples, the capacity characteristics and lifespan characteristics were improved while the DSC calorific value and gas generation amount were reduced.

In the lithium secondary batteries of Comparative Examples 1 and 4 which did not include the second cathode active material particles, the DSC calorific value and gas generation amount were high, and in the lithium secondary battery of Comparative Example 2 which did not include the first cathode active material particles, the discharge capacity was low.

In the lithium secondary batteries of Comparative Examples 3, 5 and 6 which included the second cathode active material particles but included a lithium metal oxide as the first cathode active material particles, in which a molar ratio of the cobalt based on the total number of moles of nickel, cobalt and manganese is greater than 0.15, the gas generation amount was high or the discharge capacity was low.

**Claims**

1. A cathode active material for a lithium secondary battery, comprising:

    first cathode active material particles which comprises a lithium metal oxide containing nickel, cobalt and manganese; and
    second cathode active material particles which comprises a lithium phosphate compound,
    wherein a molar ratio of the cobalt based on a total number of moles of the nickel, cobalt and manganese in the first cathode active material particles is more than 0 and less than 0.15, and
    a weight ratio of the first cathode active material particles and the second cathode active material particles is 20:80 to 80:20.

2. The cathode active material for a lithium secondary battery according to claim 1, wherein the molar ratio of the cobalt based on the total number of moles of nickel, cobalt and manganese in the first cathode active material particles is 0.01 to 0.10.

3. The cathode active material for a lithium secondary battery according to claim 1, wherein the weight ratio of the first cathode active material particles and the second cathode active material particles is 25:75 to 75:25.

4. The cathode active material for a lithium secondary battery according to claim 3, wherein the weight ratio of the first cathode active material particles and the second cathode active material particles is 30:70 to 70:30.

5. The cathode active material for a lithium secondary battery according to any one of claims 1 to 4, wherein the first cathode active material particles comprise a lithium metal oxide having a structure represented by Formula 1 below:

    [Formula 1]    $Li_bNi_xCo_yMn_zM1_kO_{2+a}$

    (in Formula 1, M1 includes at least one selected from the group consisting of Fe, Na, Mg, Ca, Ti, V, Cr, Cu, Zn, Ge, Sr, Ag, Ba, Zr, Nb, Al, Mo, Ga, W, Y, La, Ta and B, and x, y, z, k, a and b satisfy $0.5 \leq x \leq 1.0$, $0 < y < 0.15$, $0 < z \leq 0.3$, $0 \leq k \leq 0.2$, $x+y+z+k=1$, $0 \leq a \leq 0.5$, and $0.9 \leq b \leq 1.2$).

6. The cathode active material for a lithium secondary battery according to claim 5, wherein in Formula 1, y is in a range of $0.01 \leq y \leq 0.10$.

7. The cathode active material for a lithium secondary battery according to any one of claims 1 to 6, wherein the lithium phosphate compound comprises at least one selected from the group consisting of a lithium iron phosphate and a lithium manganese iron phosphate.

8. The cathode active material for a lithium secondary battery according to claim 7, wherein the lithium iron phosphate has a structure represented by Formula 2 below:

[Formula 2]     $Li_cFe_dM2_ePO_4$

(in Formula 2, M2 is at least one selected from the group consisting of Ni, Co, Mg, Y, Zn, Ru, Ti, Nb, Mo, Cr, Cu, Zr, W, Ir and V, and c, d and e satisfy $0.9 \leq c \leq 1.5$, $0.15 \leq d \leq 1$, and $0 \leq e \leq 0.9$).

9. The cathode active material for a lithium secondary battery according to claim 7, wherein the lithium manganese iron phosphate has a structure represented by Formula 3 below:

[Formula 3]     $Li_fFe_gMn_hM3_iPO_4$

(in Formula 3, M3 is at least one selected from the group consisting of Ni, Co, Mg, Y, Zn, Ru, Ti, Nb, Mo, Cr, Cu, Zr, W, Ir and V, and f, g, h and i satisfy $0.9 \leq f \leq 1.5$, $0.01 \leq g \leq 0.3$, $0.6 \leq h \leq 0.99$, $0 \leq i \leq 0.1$).

10. A lithium secondary battery, comprising:

a cathode(100) comprising a cathode active material layer(110) which comprises the cathode active material for a lithium secondary battery according to any one of claims 1 to 9; and
an anode(130) disposed to face the cathode(100).

11. The lithium secondary battery according to claim 10, wherein the anode(130) comprises an anode active material laye(120)r comprising an anode active material, and the anode active material comprises a carbon-based active material.

12. The lithium secondary battery according to claim 11, wherein the carbon-based active material comprises artificial graphite.

13. The lithium secondary battery according to claim 12, wherein the carbon-based active material further comprises natural graphite.

14. The lithium secondary battery according to claim 13, wherein a weight ratio of the artificial graphite and the natural graphite is 99:1 to 5:5.

15. The lithium secondary battery according to claim 14, wherein the weight ratio of the artificial graphite and the natural graphite is 8:2 to 6:4.

[FIG. 1]

107     127

I

150

160

I'

[FIG. 2]

140

110
105    } 100
110

120
125    } 130
120

160

**EP 4 579 802 A1**

Europäisches Patentamt
European Patent Office
Office européen des brevets

# EUROPEAN SEARCH REPORT

Application Number

EP 24 22 3078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/223482 A1 (FUJII AKIHIRO [JP] ET AL) 15 September 2011 (2011-09-15) | 1-13 | INV.<br>H01M4/36 |
| Y | * page 2, paragraph 0027 - page 9, paragraph 0165; examples 1-6, 8; tables 1,2 * | 14,15 | H01M4/505<br>H01M4/525<br>H01M4/58<br>H01M4/587 |
| | ----- | | |
| X | CN 107 565 094 A (SHANGHAI MAPLE AUTOMOBILE CO) 9 January 2018 (2018-01-09) | 1-11 | H01M10/0525 |
| Y | * page 1, paragraph 0011 - page 8, paragraph 0119; examples 2, 4, 5 * | 11-15 | ADD.<br>H01M4/02 |
| | ----- | | |
| Y | EP 3 951 943 A1 (CONTEMPORARY AMPEREX TECHNOLOGY CO LTD [CN]) 9 February 2022 (2022-02-09) * page 3, paragraph 0016 - page 11, paragraph 0105; tables 1, 2 * | 11-15 | |
| | ----- | | |

TECHNICAL FIELDS
SEARCHED (IPC)

H01M

The present search report has been drawn up for all claims

| Place of search | Date of completion of the search | Examiner |
|---|---|---|
| Munich | 30 April 2025 | Polisski, Sergej |

EPO FORM 1503 03.82 (P04C01)

EP 4 579 802 A1

## ANNEX TO THE EUROPEAN SEARCH REPORT
## ON EUROPEAN PATENT APPLICATION NO.

EP 24 22 3078

30-04-2025

| Patent document cited in search report | Publication date | Patent family member(s) | Publication date |
|---|---|---|---|
| US 2011223482 A1 | 15-09-2011 | CN 102210047 A | 05-10-2011 |
| | | EP 2357693 A1 | 17-08-2011 |
| | | JP 5381024 B2 | 08-01-2014 |
| | | JP 5574239 B2 | 20-08-2014 |
| | | JP 2011159388 A | 18-08-2011 |
| | | JP WO2010053174 A1 | 05-04-2012 |
| | | KR 20110083680 A | 20-07-2011 |
| | | US 2011223482 A1 | 15-09-2011 |
| | | WO 2010053174 A1 | 14-05-2010 |
| CN 107565094 A | 09-01-2018 | NONE | |
| EP 3951943 A1 | 09-02-2022 | CN 113748539 A | 03-12-2021 |
| | | CN 116247202 A | 09-06-2023 |
| | | EP 3951943 A1 | 09-02-2022 |
| | | EP 4191709 A1 | 07-06-2023 |
| | | EP 4276965 A2 | 15-11-2023 |
| | | ES 2970511 T3 | 29-05-2024 |
| | | HU E065042 T2 | 28-04-2024 |
| | | JP 7174863 B2 | 17-11-2022 |
| | | JP 2022525592 A | 18-05-2022 |
| | | KR 20210130780 A | 01-11-2021 |
| | | PL 3951943 T3 | 02-04-2024 |
| | | US 2022093925 A1 | 24-03-2022 |
| | | WO 2021189425 A1 | 30-09-2021 |

EPO FORM P0459